# EUROPÄISCHE PATENTSCHRIFT

(11) **EP 3 150 403 B1**
(45) Veröffentlichungstag und Bekanntmachung des Hinweises auf die Patenterteilung: **26.06.2019**
(21) Anmeldenummer: 15187357.7
(22) Anmeldetag: 29.09.2015
(51) Int. Cl.: B60C 1/00, C08L 15/00

(54) **KAUTSCHUKMISCHUNG UND FAHRZEUGREIFEN**
RUBBER COMPOSITION AND VEHICLE TYRE
COMPOSE CAOUTCHOUC ET PNEU DE VEHICULE

(43) Veröffentlichungstag der Anmeldung: 05.04.2017
(73) Patentinhaber: Continental Reifen Deutschland GmbH, 30165 Hannover (DE)
(72) Erfinder: Müller, Norbert, 29336 Nienhagen (DE); Pavon Sierra, Viktoria, 30419 Hannover (DE); Sá, Catarina, 30165 Hannover (DE)
(74) Vertreter: Finger, Karsten

(56) Entgegenhaltungen:
- EP-A1- 1 837 370
- EP-A1- 2 412 731
- DE-A1-102013 105 193
- FR-A1- 3 014 872
- TADAKI T: "Functionalized elastomer for fuel-efficient tires", KOBUNSHI, NIHON KOBUNSHI GAKKAI, JP, Bd. 61, 1. Dezember 2012 (2012-12-01), Seiten 927-928, XP009189232, ISSN: 0454-1138

## Beschreibung

Die Erfindung betrifft eine schwefelvernetzbare Kautschukmischung, insbesondere für Laufstreifen von Fahrzeugreifen, und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.
Insbesondere bei Fahrzeugreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen. Im Focus stehen hier vor allem die Eigenschaften Rollwiderstand und Abrieb. Dabei muss man berücksichtigen, dass eine Verbesserung in der einen Reifeneigenschaft oft eine Verschlechterung einer anderen Eigenschaft mit sich bringt. In einem gegebenen Mischungssystem existieren zum Beispiel verschiedene, bekannte Möglichkeiten den Rollwiderstand zu optimieren. Zu erwähnen sind hier die Senkung der Glasübergangstemperatur der Kautschukmischung, die Reduzierung des Füllgrades und der Wechsel des Polymersystems. Alle genannten Maßnahmen führen dabei zwangsläufig zu einer Verschlechterung wenigstens einer weiteren der anderen Reifeneigenschaften, wie dem Abriebverhalten und/oder dem Nassgriff und/oder den Reißeigenschaften und/oder dem Handling-Verhalten, der gegebenen Mischung.

Für die Optimierung des Rollwiderstandsverhaltens oder eine Optimierung diverser anderer für den Einsatz im Reifen relevanter Eigenschaften von Kautschukmischungen ohne eine Verschlechterung des Rollwiderstandsverhaltens ist bekannt, den eingesetzten Dienkautschuk derart zu funktionalisieren, dass eine Anbindung an den oder die Füllstoff(e) erfolgt.

So wird beispielsweise in der EP 2357211 A1 eine Kautschukmischung offenbart, die zumindest ein aliphatisches und/oder aromatisches Kohlenwasserstoffharz, zumindest einen Füllstoff und zumindest einen funktionalisierten Dienkautschuk enthält, dessen Funktionalisierung entlang der Polymerkette und/oder am Ende vorliegt und eine Anbindung an Füllstoffe ermöglicht. Als Funktionalisierungen werden Hydroxy-Gruppen in der Tabelle 1 für eine Anbindung der Polymere an Kieselsäure offenbart.
Wie aus den Beispielen hervorgeht, sind für die gewünschte Verbesserung des Abriebverhaltens und der Nassgriffeigenschaften 20 phr eines Kohlenwasserstoffharzes als Weichmacher notwendig, wobei sich das Rollwiderstandsverhalten verschlechtert.

Auch in der EP 0806452 A1 wird eine Kautschukmischung beschrieben, die einen funktionalisierten Dienkautschuk enthält, der für die Anbindung an Kieselsäure als funktionelle Gruppen u.a. Hydroxy-Gruppen trägt.

In der EP 1457501 A1 wird ein funktionalisiertes Styrol-Butadien-Copolymer offenbart, das pro Styrol-Butadien-Copolymer-Kette als funktionelle Gruppen eine primäre Amino-Gruppe und eine Alkoxysilyl-Gruppe trägt. Ferner werden in der EP 1457501 A1 Kautschukmischungen mit diesem Styrol-Butadien-Copolymer sowie Reifen, deren Laufstreifen aus dieser Kautschukmischung bestehen, offenbart. Die Reifen sollen sich durch eine gute Balance zwischen Abriebwiderstand, Haltbarkeit, Hystereseverlust und Nassgriffverhalten auszeichnen.
Auch aus der EP 1837370 A1 geht eine Kautschukmischung hervor, in der ein solches funktionalisiertes Styrol-Butadien-Copolymer offenbart, das pro Styrol-Butadien-Copolymer-Kette als funktionelle Gruppen eine primäre Amino-Gruppe und eine Alkoxysilyl-Gruppe trägt, enthalten ist. Hierbei zeigt die Kautschukmischung in Kombination mit einem bestimmten Rußtypen verbesserte Reifeneigenschaften, wie Nassbremsen, Abrieb und Rollwiderstandsverhalten.
Auch in der EP 2098384 B1 wird eine Kautschukmischung offenbart, die ein lösungspolymerisiertes Styrol-Butadien-Copolymer enthält, welches als funktionelle Gruppen eine Amino-Gruppe und eine Alkoxysilyl-Gruppe (Amino-Siloxan-Gruppe) trägt. Hiermit wird eine Verbesserung im Trockenbremsen, Handling, Nassbremsen und dem Abriebverhalten erzielt, wobei der Einfluss auf den Rollwiderstand im Zielkonflikt nicht offenbart wird.
In der US 20070185267 A1 wird eine Kautschukmischung offenbart, die ein konjugiertes Dien-basiertes Copolymer enthalten kann, welches mit einer Alkoxysilyl-Gruppe und zwei Amino-Gruppen funktionalisiert sein kann.

In der DE 102013105193 A1 wird eine Kautschukmischung beschrieben, die sich durch eine weitere Verbesserung im Rollwiderstandsverhalten auszeichnet, wobei die weiteren physikalischen Eigenschaften auf gleichem Niveau verbleiben bzw. insbesondere das Abriebverhalten und/oder die Nassgriffeigenschaften ebenfalls weiter optimiert werden. Hierzu enthält die Kautschukmischung funktionalisiertes Styrol-Butadien-Copolymer, welches pro Polymerkette an wenigstens einem Kettenende mit einer Amino-Gruppen-enthaltenden Alkoxysilyl-Gruppe und wenigstens einer weiteren Amino-Gruppe(n) und/oder wenigstens einer weiteren Alkoxysilyl-Gruppe(n) und/oder wenigstens einer weiteren Amino-Gruppen-enthaltenden Alkoxysilyl-Gruppe(n) funktionalisiert ist.

Ausgehend von dem genannten Stand der Technik liegt der vorliegenden Erfindung nun die Aufgabe zu Grunde, eine Kautschukmischung, insbesondere für Fahrzeugreifen, Gurte, Riemen und Schläuche, bereitzustellen, deren Vulkanisat gegenüber dem Stand der Technik eine weitere Verbesserung der Rollwiderstandsindikatoren aufweist.

Gelöst wird diese Aufgabe durch eine schwefelvernetzbare Kautschukmischung enthaltend:
- 20 bis 100 phr zumindest eines funktionalisierten Styrol-Butadien-Copolymers A, wobei das funktionalisierte Styrol-Butadien-Copolymer pro Polymerkette an wenigstens einem Kettenende mit einer Amino-Gruppen-enthaltenden Alkoxysilyl-Gruppe und wenigstens einer weiteren Alkoxysilyl-Gruppe(n) und/oder wenigstens einer weiteren Amino-Gruppen-enthaltenden Alkoxysilyl-Gruppe(n) funktionalisiert ist, und
- 7 bis 15 phf zumindest eines geblockten und/oder ungeblockten Mercaptosilans, wobei geblockte Mercaptosilane eine S-SG-Gruppe und damit eine Schutzgruppe SG am Schwefelatom aufweisen, wobei die Schutzgruppen Acylgruppen sind, und
- 20 bis 300 phr Kieselsäure und/oder Ruß.

Überraschenderweise wurde gefunden, dass die Kombination zumindest eines funktionalisierten Styrol-Butadien-Copolymers (A) mit den oben genannten Merkmalen mit zumindest einem geblockten und/oder ungeblockten Mercaptosilan und 20 bis 300 phr Kieselsäure und/oder Ruß in der erfindungsgemäßen Kautschukmischung eine weitere Verbesserung der Rollwiderstandsindikatoren bewirkt.
Ein weiterer Gegenstand der vorliegenden Erfindung ist ein Fahrzeugreifen, der wenigstens in einem Bauteil, insbesondere wenigstens im Laufstreifen, wenigstens ein Vulkanisat wenigstens einer schwefelvernetzbaren Kautschukmischung mit oben genannten Merkmalen aufweist. Bei Laufstreifen mit einer Cap/Base-Konstruktion handelt es sich bevorzugt wenigstens um die Cap.
Fahrzeugreifen, die die erfindungsgemäße Kautschukmischung wenigstens im Laufstreifen enthalten, weisen einen geringeren und damit verbesserten Rollwiderstand auf.

Unter Fahrzeugreifen werden im Rahmen der vorliegenden Erfindung alle dem Fachmann bekannten Fahrzeugreifen, wie insbesondere Fahrzeugluftreifen und Vollgummireifen, inklusive Reifen für Industrie- und Baustellenfahrzeuge, LKW-, PKW- sowie Zweiradreifen, verstanden.

Die erfindungsgemäße Kautschukmischung ist ferner auch für andere Bauteile von Fahrzeugreifen geeignet, wie z.B. insbesondere Seitenwand, Hornprofil, sowie innere Reifenbauteile.

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet, wobei sie aufgrund des Anforderungsprofils insbesondere für Förderbänder geeignet ist.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Gewichtsmittel Mw des Molekulargewichts gemäß GPC von 250000 bis 5000000 g/mol) und dadurch festen Kautschuke bezogen.

Die in dieser Schrift verwendete Angabe phf (parts per hundred parts of filler by weight) ist dabei die in der Kautschukindustrie gebräuchliche Mengenangabe für Kupplungsagenzien für Füllstoffe.
Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Unter dem Begriff "funktionalisiertes Styrol-Butadien-Copolymer" wird im Rahmen der vorliegenden Erfindung verstanden, dass der Funktionalisierungsgrad der gesamten Styrol-Butadien-Copolymer-Menge 30 bis 100 mol-% beträgt, d.h. dass 30 bis 100 mol-%, bevorzugt 70 bis 100 mol-% der Polymerketten funktionalisiert sind.

Erfindungswesentlich ist der funktionalisierte Styrol-Butadien-Copolymer pro Polymerkette an wenigstens einem Kettenende mit einer Amino-Gruppen-enthaltenden Alkoxysilyl-Gruppe und wenigstens einer weiteren Alkoxysilyl-Gruppe(n) und/oder wenigstens einer weiteren Amino-Gruppen-enthaltenden Alkoxysilyl-Gruppe(n) funktionalisiert. Zu der zwangsweise vorhandenen Amino-Gruppen-enthaltenden Alkoxysilyl-Gruppe ist also wenigstens eine weitere funktionelle Gruppe an das Kettenende des funktionalisierten Styrol-Butadien-Copolymer geknüpft, die insbesondere mit Kieselsäure in Wechselwirkung treten kann.
Hierbei sind alle möglichen Kombinationen der genannten funktionellen Gruppen denkbar. Gemäß einer bevorzugten Weiterbildung der Erfindung ist zusätzlich zu der zwangsweise vorhandenen Amino-Gruppen-enthaltenden Alkoxysilyl-Gruppe eine weitere Gruppe ausgewählt aus der Gruppe bestehend aus Alkoxysilyl-Gruppen und Amino-Gruppen-enthaltenden Alkoxysilyl-Gruppen an das Kettenende jeweils einer Polymerkette des funktionalisierten Styrol-Butadien-Kautschuks geknüpft.
Gemäß einer weiteren bevorzugten Weiterbildung der Erfindung sind zusätzlich zu der zwangsweise vorhandenen Amino-Gruppen-enthaltenden Alkoxysilyl-Gruppe zwei weitere Gruppen ausgewählt aus Alkoxysilyl-Gruppen und Amino-Gruppen-enthaltenden Alkoxysilyl-Gruppen an das Kettenende jeweils einer Polymerkette des funktionalisierten Styrol-Butadien-Kautschuks geknüpft.

Die funktionellen Gruppen des funktionalisierten Styrol-Butadien-Copolymers können also Amino-Gruppen-enthaltende Alkoxysilyl-Gruppe(n) und Alkoxysilyl-Gruppe(n) sein. Sämtliche Amino-Gruppen des funktionalisierten Styrol-Butadien-Copolymers können mit oder ohne Spacer an das Kettenende der Polymerkette gebunden sein. Die Anbindung mit Spacer bedeutet, dass zwischen dem Kohlenstoffatom des Kettenendes der Polymerkette und dem Stickstoffatom der Amino-Gruppe keine direkte Verknüpfung besteht, sondern eine Gruppe eines oder mehrerer Atome dazwischen angeordnet ist. Beispielsweise könnte eine organische Gruppe, die auch die Alkoxysilyl-Gruppe trägt, als Spacer zwischen Poylmerkettenende und Amino-Gruppe fungieren.

Die Amino-Gruppen-enthaltende Alkoxysilyl-Gruppe(n) sowie die Alkoxysilyl-Gruppe(n) können zudem Schutzgruppen tragen.

Derartige funktionalisierte Styrol-Butadien-Copolymere werden durch folgendes Verfahren erhalten:
- Anionische Polymerisation von Styrol- und Butadien-Monomeren zu einer Styrol-Butadien-Copolymer-Kette mittels eines Alkali- oder Erdalkali-Metalls und
- Reaktion des lebenden, über Alkali- oder Erdalkali-Metall aktivierten Endes der Polymerkette mit einem Alkoxysilan, wobei wenigstens eine Alkoxysilyl-Gruppe des Alkoxysilans mit einer Amino-Gruppen enthaltenden Schutzgruppe geschützt ist, und
- Reaktion der Alkoxysilyl-funktionalisierten Polymerkette mit einem weiteren Alkoxysilan zu einer Polymerkette, die mit einer Amino-Gruppen-enthaltenden Alkoxysilyl-Gruppe und wenigstens einer weiteren Alkoxysilyl-Gruppe funktionalisiert ist.

Bei diesem Herstellungsverfahren des funktionalisierten Styrol-Butadien-Copolymers kann die weitere Alkoxysilyl-Gruppe beispielsweise ebenfalls eine Amino-Gruppen-enthaltende Schutzgruppe tragen, sodass das Polymer in diesem Fall mit zwei Amino-Gruppen-enthaltenden Alkoxysilyl-Gruppen funktionalisiert ist.
Die Amino-Gruppen können ebenfalls Schutzgruppen tragen.

Das funktionalisierte Styrol-Butadien-Copolymer A kann lösungspolymerisiert oder emulsionspolymerisiert sein. Bevorzugt handelt es sich um lösungspolymerisiertes Styrol-Butadien-Copolymer (SSBR).

Das funktionalisierte Styrol-Butadien-Copolymer wird im Rahmen der vorliegenden Erfindung auch als "funktionalisierter Styrol-Butadien-Kautschuk A" bezeichnet. Bei dem genannten Copolymer bzw. Kautschuk handelt es sich um einen Dienkautschuk.

Das funktionalisierte Styrol-Butadien-Copolymer A weist bevorzugt ein Gewichtsmittel Mw des Molekulargewichts gemäß GPC von 300000 bis 500000 g/mol, besonders bevorzugt 300000 bis 400000 g/mol, auf und kann damit auch als zumindest bei Raumtemperatur fester Kautschuk bezeichnet werden.

Das funktionalisierte Styrol-Butadien-Copolymer A weist im unvulkanisierten Zustand bevorzugt einen Styrol-Gehalt von 5 bis 45 Gew.-%, besonders bevorzugt einen Styrol-Gehalt von 5 bis 30 Gew.-%, und einen Vinyl-Anteil bezogen auf den Butadien-Anteil von 5 bis 80 Gew.-%, besonders bevorzugt einen Vinyl-Anteil von 10 bis 70 Gew.-%, auf. Die Glasübergangstemperatur T_{g} des funktionalisierten Styrol-Butadien-Copolymers beträgt im unvulkanisierten Zustand bevorzugt -10 °C bis -80 °C, besonders bevorzugt -15 bis -70 °C. Gemäß einer bevorzugten Ausführungsform der Erfindung weist das funktionalisierte Styrol-Butadien-Copolymer A bevorzugt einen Styrol-Gehalt von 5 bis 15 Gew.-% und einen Vinyl-Anteil von 30 bis 50 Gew.-% sowie eine T_{g} von -50 °C bis -70 °C auf.
Mit einer derartigen bevorzugten und insbesondere besonders bevorzugten Mikrostruktur des funktionalisierten Styrol-Butadien-Copolymers lassen sich in der erfindungsgemäßen Kautschukmischungen gegenüber dem Stand der Technik Vorteile hinsichtlich des Zielkonfliktes aus Rollwiderstandsverhalten und Nassgriff sowie den Handling-Prediktoren erzielen.

Die Bestimmung des Styrol-Gehaltes und des Vinyl-Anteils der im Rahmen der vorliegenden Erfindung diskutierten Polymere erfolgt mittels ¹³C-NMR (Lösungsmittel Deuterochloroform CDCl₃; NMR: *engl.* "nuclear magnetic resonance") und Abgleich mit Daten aus der Infrarot-Spektrometrie (IR; FT-IR Spektrometer der Firma Nicolet, KBr-Fenster 25 mm Durchmesser x 5 mm, 80 mg Probe in 5 mL 1,2-Dichlorbenzol). Die Bestimmung der Glasübergangstemperatur (T_{g}) erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf
Temperaturen niedriger als -120 °C mit 10 °C/min).

Das funktionalisierte Styrol-Butadien-Copolymer (A) ist in der erfindungsgemäßen Kautschukmischung in Mengen von 20 bis 100 phr enthalten.
Somit ist in den Ausführungsformen, in denen die erfindungsgemäße Kautschukmischung weniger als 100 phr des Styrol-Butadien-Copolymers A enthält, wenigstens ein weiterer Dienkautschuk mit einem Gewichtsmittel des Molekulargewichtes Mw gemäß GPC von 250000 bis 5000000 g/mol enthalten.

Gemäß einer bevorzugten Ausführungsform der Erfindung enthält die schwefelvernetzbare Kautschukmischung wenigstens einen weiteren Dienkautschuk.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem weiteren Dienkautschuk kann es sich um natürliches Polyisopren und/oder synthetisches Polyisopren und/oder epoxidiertes Polyisopren und/oder Butadien-Kautschuk (BR, Polybutadien) und/oder unfunktionalisierten Styrol-Butadien-Kautschuk und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk und/oder Butadien-Isopren-Kautschuk handeln.
Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Bevorzugt ist der weitere Dienkautschuk ausgewählt aus der Gruppe bestehend aus natürlichem Polyisopren, synthetischem Polyisopren und Butadien-Kautschuk. Gemäß einer bevorzugten Ausführungsform der Erfindung ist der weitere Dienkautschuk ausgewählt aus der Gruppe bestehend aus natürlichem Polyisopren und synthetischem Polyisopren. Besonders bevorzugt ist der weitere Dienkautschuk natürliches Polyisopren. Besonders bevorzugt enthält die erfindungsgemäße Kautschukmischung 3 bis 30 phr natürliches Polyisopren.
Hiermit ergibt sich eine optimierte Prozessierbarkeit der erfindungsgemäßen Kautschukmischung, insbesondere ein optimiertes Mischverhalten, eine verbesserte Grünfestigkeit und ein verbessertes Extrusionsverhalten.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

In einer bevorzugten Ausführungsform der Erfindung ist das funktionalisierte Styrol-Butadien-Copolymer (A) in der erfindungsgemäßen Kautschukmischung in Mengen von 40 bis 100 phr, bevorzugt 50 bis 100 phr, besonders bevorzugt 70 bis 100 phr enthalten. In einer weiteren bevorzugten Ausführungsform der Erfindung ist das funktionalisierte Styrol-Butadien-Copolymer (A) in der erfindungsgemäßen Kautschukmischung in Mengen von 40 bis 97 phr, bevorzugt 50 bis 97 phr, besonders bevorzugt 70 bis 90 phr enthalten und der wenigstens eine weitere Dienkautschuk in Mengen von 3 bis 60 phr, bevorzugt 3 bis 50 phr, besonders bevorzugt 10 bis 30 phr enthalten, wobei auch ein Gemisch mehrerer weiterer Dienkautschuke denkbar ist. Bevorzugt ist der weitere Dienkautschuk auch in dieser Ausführungsform wenigstens ein natürliches Polyisopren mit den oben genannten Vorteilen.

In einer wiederum ganz besonders bevorzugten Ausführungsform der Erfindung beträgt die Menge des in der Kautschukmischung enthaltenen funktionalisierten Styrol-Butadien-Copolymers (A) 70 bis 90 phr und die Menge an enthaltenem natürlichem Polyisopren 10 bis 30 phr.

Die erfindungsgemäße Kautschukmischung enthält 20 bis 300 phr Kieselsäure und/oder Ruß. Bevorzugt enthält die Kautschukmischung wenigstens eine Kieselsäure.

Die Begriffe "Kieselsäure" und "Silika" werden im Rahmen der vorliegenden Erfindung, wie auch in der Fachwelt üblich, synonym verwendet.

Die Kautschukmischung kann 0 bis 270 phr, bevorzugt 0 bis 200 phr, besonders bevorzugt 0 bis 150 phr, Kieselsäure enthalten.
Gemäß einer bevorzugten Ausführungsform der Erfindung enthält die Kautschukmischung wenigstens aber 0,1 phr, besonders bevorzugt wenigstens aber 0,5 phr, Kieselsäure. Besonders bevorzugt enthält die Kautschukmischung in dieser Ausführungsform 20 bis 150 phr, ganz besonders bevorzugt 60 bis 150 phr Kieselsäure, wiederum besonders bevorzugt 70 bis 90 phr Kieselsäure. Hierdurch ergeben sich besonders gute Rollwiderstandseigenschaften bei gleichzeitig guten Abriebeigenschaften. In dieser bevorzugten Ausführungsform sind bevorzugt 2 bis 20 phr, besonders bevorzugt 10 bis 17 phr Ruß in der Kautschukmischung enthalten.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 60 bis 350 m²/g, besonders bevorzugt von 120 bis 320 m²/g, und eine CTAB-Oberfläche (gemäß ASTM D 3765) von 30 bis 380 m²/g, bevorzugt von 50 bis 330 m²/g, besonders bevorzugt von 110 bis 300 m²/g, aufweist.
Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Solvay), zum Einsatz kommen.

Im Rahmen der vorliegenden Erfindung sind alle dem Fachmann bekannten Ruß-Typen denkbar. Bevorzugt wird jedoch ein Ruß eingesetzt, der eine Jodadsorptionszahl gemäß ASTM D 1510 von 20 bis 180 g/kg, besonders bevorzugt 30 bis 140 kg/g, und eine DBP-Zahl gemäß ASTM D 2414 von 30 bis 200 ml/100 g, bevorzugt 90 bis 180 ml/100g, besonders bevorzugt 90 bis 150 ml/100g, aufweist. Ein besonders geeigneter Ruß im Rahmen der vorliegenden Erfindung ist beispielsweise ein Ruß des ASTM-Typs N339 mit einer Jodadsorptionszahl von 90 g/kg und einer DBP-Zahl von 120 ml/100g. Hiermit werden für die Anwendung im Fahrzeugreifen, insbesondere im Laufstreifen, besonders gute Eigenschaften im Hinblick auf die technische Aufgabe erzielt.

Die erfindungsgemäße Kautschukmischung kann, bevorzugt möglichst geringe Mengen d.h. bevorzugt 0 bis 2 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Erfindungsgemäß enthält die Kautschukmischung 7 bis 15 phf, bevorzugt 9 bis 15 phf, zumindest eines geblockten und/oder ungeblockten Mercaptosilans.

Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist, wobei die Schutzgruppen Acylgruppen sind.

Der Ausdruck "geblocktes und/oder ungeblocktes Mercaptosilan" bedeutet, dass sowohl ein geblocktes, als auch ein ungeblocktes, als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel I) auf:

I) (R⁴)₃Si-Z-S-R⁵ ,

wobei die Reste R⁴ innerhalb eines Moleküls gleich oder verschieden voneinander sein können und Alkoxy-Gruppen mit 1 bis 10 Kohlenstoffatomen und/oder Alkylpolyethergruppen der Form -O-((CH₂)ₙ-O-)ₘR⁶ mit m = 2 bis 9 und n = 2 bis 9 sind, wobei die Reste R⁶ innerhalb eines Moleküls gleich oder verschieden voneinander sein können und Alkylgruppen mit 10 bis 25 Kohlenstoffatomen sind, und wobei R⁵ eine Acylgruppe mit 1 bis 20 Kohlenstoffatomen oder ein Wasserstoffatom (H) ist, und
wobei Z eine Alkylgruppe mit 1 bis 10 Kohlenstoffatomen ist.
S ist die Abkürzung für Schwefel und Si für Silizium und O für Sauerstoffatom.

Gemäß einer bevorzugten Ausführungsform der Erfindung handelt es sich um wenigstens ein geblocktes Mercaptosilan. Gemäß einer bevorzugten Weiterbildung dieser Ausführungsform der Erfindung enthält die erfindungsgemäße Kautschukmischung kein, d.h. 0 phf, ungeblocktes Mercaptosilan, d.h. in dieser Ausführungsform ist sie frei von ungeblocktem Mercaptosilan.
Geblockte Mercaptosilane tragen an dem Schwefelatom eine Schutzgruppe, in dem vorliegenden Fall in Formel I) die Gruppe R⁵, wodurch sie auch "geschützte Mercaptosilane" genannt werden.

Gemäß einer bevorzugten Ausführungsform des geblockten Mercaptosilans sind alle Gruppen R⁴ Alkoxygruppen. Besonders bevorzugt ist wenigstens eine der drei Gruppen R⁴ eine Ethoxygruppe. Ganz besonders bevorzugt handelt es sich bei allen drei Gruppen R⁴ um jeweils eine Ethoxygruppe (abgekürzt mit OEt).
Gemäß einer bevorzugten Ausführungsform der Erfindung handelt es sich bei dem geblockten Mercaptosilan um 3-Octanoylthio-1-propyltriethoxysilan, womit in oben genannter Formel I) alle Reste R⁴ Ethoxy (OEt) sind und Z eine Propylgruppe ist und R⁵ eine Octanoylgruppe ist.
Überraschenderweise ergibt sich aus der Kombination des oben beschriebenen funktionalisierten Styrol-Butadien-Copolymers (A) mit einem geblockten Mercaptosilan, insbesondere 3-Octanoylthio-1-propyltriethoxysilan, ein synergistisches Zusammenwirken hinsichtlich einer weiteren Verbesserung der Rollwiderstandsindikatoren.

Gemäß einer weiteren bevorzugten Ausführungsform der Erfindung handelt es sich um wenigstens ein ungeblocktes Mercaptosilan. Gemäß einer bevorzugten Weiterbildung dieser Ausführungsform der Erfindung enthält die erfindungsgemäße Kautschukmischung kein, d.h. 0 phf, geblocktes Mercaptosilan, d.h. in dieser Ausführungsform ist sie frei von geblocktem Mercaptosilan.
Ungeblockte Mercaptosilane tragen an dem Schwefelatom wie oben beschrieben ein Wasserstoffatom.
Gemäß einer bevorzugten Ausführungsform des ungeblockten Mercaptosilans ist eine der Gruppen R⁴ eine Alkoxygruppe, besonders bevorzugt eine Ethoxygruppe.
Hierbei sind die anderen beiden Gruppen R⁴ des ungeblockten Mercaptosilans bevorzugt Alkylpolyethergruppen der oben beschriebenen Form -O-((CH₂)n-O-)ₘR⁶.
Gemäß einer besonders bevorzugten Ausführungsform des ungeblockten Mercaptosilans sind beide Alkylpolyethergruppen gleich und n = 2 und m = 5 und R⁶ eine unverzweigte aliphatische Alkylgruppe mit 13 Kohlenstoffatomen.
Bevorzugt ist Z in dieser Ausführungsform eine Propylgruppe.
Mit einem derartigen Silan wird überraschenderweise in Kombination mit dem oben beschriebenen funktionalisierten Styrol-Butadien-Copolymer (A) ein synergistisches Zusammenwirken hinsichtlich einer weiteren Verbesserung der Rollwiderstandsindikatoren und zusätzlich einer Verbesserung der Zugfestigkeit und damit der Reißeigenschaften erzielt. Ein derartiges Silan ist beispielsweise unter dem Handelsnamen Si363® der Firma Evonik erhältlich.

Es ist neben den oben genannten Ausführungsformen und Weiterbildungen auch denkbar, dass die erfindungsgemäße Kautschukmischung ein Gemisch aus geblocktem Mercaptosilan, bevorzugt und insbesondere 3-Octanoylthio-1-propyltriethoxysilan, und ungeblocktem Mercaptosilan, bevorzugt gemäß oben beschriebener Ausführungsform, enthält.

Die erfindungsgemäße Kautschukmischung kann weiterhin andere im Stand der Technik bekannte Silane enthalten, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik).
Bevorzugt enthält sie jedoch außer dem geblockten und/oder ungeblockten Mercaptosilan kein weiteres Silan, d.h. sie ist bevorzugt frei von weiteren Silanen wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik).

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Gemäß einer bevorzugten Ausführungsform enthält die erfindungsgemäße Kautschukmischung wenigstens einen Weichmacher, wobei die Gesamtmenge an Weichmacher bevorzugt 1 bis 50 phr, besonders bevorzugt 10 bis 50 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Rollwiderstandsindikatoren und gutem (und damit geringem) Wärmeaufbau.
Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Bei den Weichmacherharzen kann es sich insbesondere und bevorzugt um nicht modifizierte Phenolharze handeln.
Der Weichmacher ist bevorzugt ausgewählt aus der Gruppe bestehend aus den oben genannten Weichmachern.
Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.
Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Harze,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe kann Zinkoxid (ZnO) in den oben genannten Mengen enthalten sein.
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel D):

D) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.
Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel D), sowie die oben genannten Systeme Vulkuren®, Duralink® und Perkalink® begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).
Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.
Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.
Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.
Die Herstellung der erfindungsgemäßen Kautschukmischung zur Verwendung als Body-Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen äußeren sowie inneren Bauteile eines Reifen bezeichnet, wie im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage.
Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den Tabellen 1 und 2 zusammengefasst sind, näher erläutert werden.
Die Vergleichsmischungen sind mit V, die erfindungs gemäßen Mischungen sind mit E gekennzeichnet.
Die Mischungsherstellung erfolgte nach dem in der
Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.
Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) gemäß DIN ISO 7619-1 und konditionierte Shore-A-Härte in Anlehnung an DIN ISO 7619-1, zehnfach mit 5 MPa vorkonditioniert und anschließend nach ISO 868 geprüft.
- Rückprallelastizität bei 70°C gemäß ISO 4662 oder ASTM D 1054
- Zugfestigkeit, Bruchdehnung und Spannungswert bei 300% Dehnung (M300) bei Raumtemperatur gemäß DIN 53 504
- Maximaler (max) Verlustfaktor tan δ (tangens delta, tan d max) sowie mittlerer dynamischer Speichermodul E' aus dynamisch-mechanischer Messung bei 55 °C gemäß DIN 53 513, Dehnungsdurchlauf (engl. "strain sweep") bei einer Vorkompression von 20 %, einer Frequenz von 10 Hz und einem Dehnungsbereich von 0,1 % bis 12%.
- Verhältniswert zwischen Umsatzgeschwindigkeitskonstante K30 und K90 (K30/K90) als Maß für die Vernetzungsgeschwindigkeit (K30=Konstante bei 30 % Umsatz und K90=Konstante bei 90 % Umsatz) gemäß DIN 53529 bzw. ASTM D5289 und ISO 6502

### Verwendete Substanzen:

- a) SBR: SSBR, Nipol NS 612
- b) SBR: SSBR HPR 840, Fa. JSR Corporation: lösungspolymerisiertes funktionalisiertes Styrol-Butadien-Copolymer, welches pro Polymerkette an wenigstens einem Kettenende mit einer Amino-Gruppen-enthaltenden Alkoxysilyl-Gruppe und einer weiteren funktionellen Gruppe ausgewählt aus der Gruppe bestehend aus Alkoxysilyl-Gruppen und Amino-Gruppen-enthaltenden Alkoxysilyl-Gruppen, funktionalisiert ist; Styrol-Gehalt: 10 Gew.-%, Vinylanteil ca. 40 %, T_{g} = - 60 °C
- c) Kieselsäure VN3, Fa. Evonik
- d) TDAE
- e) Prozesshilfsmittel: Fettsäureester und Zinkseifen
- f) Silan 75 % S₂-Silan, Si75®, Fa. Evonik
- g) ungeblocktes Mercaptosilan Si363®, Fa. Evonik
- h) Alterungsschutzmittel: 6PPD, Ozonschutzwachs
- i) Vulkanisationsbeschleuniger: CBS, MBT (2-Mercaptobenzothiazol) sowie DPG
- j) geblocktes Mercaptosilan: NXT, 3-(Octanoylthio)-1-Propyl-Triethoxysilan, Fa. Momentive

**Tabelle 1**

| **Bestandteile** | **Einheit** | **V1** | **V2** | **V3** | **E1** |
|---|---|---|---|---|---|
| NR TSR | phr | 20 | 20 | 20 | 20 |
| SBR ^{a)} | phr | 80 | - | 80 | - |
| SBR ^{b)} | phr | - | 80 | - | 80 |
| Ruß N339 | phr | 14 | 14 | 14 | 14 |
| Kieselsäure ^{c)} | phr | 85 | 85 | 85 | 85 |
| Öl ^{d)} | phr | 48 | 48 | 48 | 48 |
| ZnO | phr | 3 | 3 | 3 | 3 |
| Stearinsäure | phr | 2 | 2 | 2 | 2 |
| Prozesshilfsmittel ^{e)} | phr | 5 | 5 | 5 | 5 |
| Silan ^{f)} | phf | 7,1 | 7,1 | - | - |
| Silan ^{g)} | phf | - | - | 12 | 12 |
| Alterungsschutz ^{h)} | phr | 4 | 4 | 4 | 4 |
| Beschleuniger ⁱ⁾ | phr | 3,8 | 3,8 | 3,8 | 3,8 |
| Schwefel | phr | 2,1 | 2,1 | 2,1 | 2,1 |

| **Physikalische Eigenschaften** | | | | | |
|---|---|---|---|---|---|
| Shore Härte A | Shore A | 56 | 57 | 50 | 52 |
| kond. Sh A | Shore A | 54 | 55 | 48 | 51 |
| Rückprall 70 °C | % | 51 | 55 | 45 | 52 |
| Zugfestigkeit | MPa | 15 | 15 | 12 | 14 |
| Bruchdehnung | % | 630 | 600 | 789 | 676 |
| M300 | MPa | 6,0 | 6,6 | 3,7 | 4,9 |
| E' (mittel) | MPa | 6,2 | 6,0 | 5,7 | 5,4 |
| tan d max. | | 0,1797 | 0,1488 | 0,201 | 0,1578 |
| K30/K90 | 1/min | 0,191 | 0,1133 | 0,0474 | 0,0496 |

**Tabelle 2**

| **Bestandteile** | **Einheit** | **V4** | **V5** | **V6** | **E2** |
|---|---|---|---|---|---|
| NR TSR | phr | 20 | 20 | 20 | 20 |
| SBR ^{a)} | phr | 80 | - | 80 | - |
| SBR ^{b)} | phr | - | 80 | - | 80 |
| Ruß N339 | phr | 14 | 14 | 14 | 14 |
| Kieselsäure ^{c)} | phr | 85 | 85 | 85 | 85 |
| Öl ^{d)} | phr | 48 | 48 | 48 | 48 |
| ZnO | phr | 3 | 3 | 3 | 3 |
| Stearinsäure | phr | 2 | 2 | 2 | 2 |
| Prozesshilfsmittel ^{e)} | phr | 5 | 5 | 5 | 5 |
| Silan ^{f)} | phf | 7,1 | 7,1 | - | - |
| Silan ^{j)} | phf | - | - | 10,2 | 10,2 |
| Alterungsschutz ^{h)} | phr | 4 | 4 | 4 | 4 |
| Beschleuniger ⁱ⁾ | phr | 3,8 | 3,8 | 3,8 | 3,8 |
| Schwefel | phr | 2,1 | 2,1 | 2,1 | 2,1 |

| **Physikalische Eigenschaften** | | | | | |
|---|---|---|---|---|---|
| Shore Härte A | Shore A | 56 | 57 | 56 | 57 |
| kond. Sh A | Shore A | 54 | 55 | 54 | 56 |
| Rückprall 70 °C | % | 51 | 55 | 52 | 58 |
| Zugfestigkeit | MPa | 15 | 15 | 14 | 15 |
| Bruchdehnung | % | 630 | 600 | 582 | 534 |
| M300 | MPa | 6,0 | 6,6 | 6,4 | 7,5 |
| E' (mittel) | MPa | 6,2 | 6,0 | 5,7 | 5,4 |

Wie an Tabelle 1 erkennbar ist, wird mit der erfindungsgemäßen Kautschukmischung E1 eine Verbesserung der Vernetzungsgeschwindigkeit (K30/K90) erzielt, während die Rückprallelastizität bei 70 °C als Indikator für den Rollwiderstand und die Zugfestigkeit gegenüber V1 ebenfalls verbessert wird.

Wie an Tabelle 2 erkennbar ist, wird mit der erfindungsgemäßen Kautschukmischung E2 eine Verbesserung des Rollwiderstandsindikators Rückprallelastizität bei 70 °C bei gleichbleibender Zugfestigkeit erzielt.

Ein Fahrzeugreifen, der die erfindungsgemäße Kautschukmischung in wenigstens einem Bauteil aufweist, bevorzugt wenigstens in dem Laufstreifen und hierbei wenigstens in der Cap im Fall von Cap/Base-Konstruktion, weist im Vergleich zum Stand der Technik einen geringeren und damit optimierten Rollwiderstand bei guten sonstigen Eigenschaften auf.

## Patentansprüche

1. Schwefelvernetzbare Kautschukmischung enthaltend
- 20 bis 100 phr zumindest eines funktionalisierten Styrol-Butadien-Copolymers A, wobei das funktionalisierte Styrol-Butadien-Copolymer pro Polymerkette an wenigstens einem Kettenende mit einer Amino-Gruppen-enthaltenden Alkoxysilyl-Gruppe und wenigstens einer weiteren Alkoxysilyl-Gruppe(n) und/oder wenigstens einer weiteren Amino-Gruppen-enthaltenden Alkoxysilyl-Gruppe(n) funktionalisiert ist, und
- 7 bis 15 phf zumindest eines geblockten und/oder ungeblockten Mercaptosilans, wobei geblockte Mercaptosilane eine S-SG-Gruppe und damit eine Schutzgruppe SG am Schwefelatom aufweisen, wobei die Schutzgruppen Acylgruppen sind, und
- 20 bis 300 phr Kieselsäure und/oder Ruß.

2. Kautschukmischung nach Anspruch 1, **dadurch gekennzeichnet, dass** das funktionalisierte Styrol-Butadien-Copolymer A ein lösungspolymerisiertes Styrol-Butadien-Copolymer ist.

3. Kautschukmischung nach einem der vorherigen Ansprüche, **dadurch gekennzeichnet, dass** das funktionalisierte Styrol-Butadien-Copolymer A einen Styrol-Gehalt von 5 bis 30 Gew.-% aufweist.

4. Kautschukmischung nach einem der vorherigen Ansprüche, **dadurch gekennzeichnet, dass** das funktionalisierte Styrol-Butadien-Copolymer A eine Glasübergangstemperatur von -15 bis -70 °C aufweist.

5. Kautschukmischung nach einem der vorherigen Ansprüche, **dadurch gekennzeichnet, dass** das funktionalisierte Styrol-Butadien-Copolymer A eine weitere Gruppe ausgewählt aus der Gruppe bestehend aus Alkoxysilyl-Gruppen und Amino-Gruppen-enthaltenden Alkoxysilyl-Gruppen aufweist.

6. Kautschukmischung nach einem der vorherigen Ansprüche, **dadurch gekennzeichnet, dass** sie 3 bis 30 phr natürliches Polyisopren enthält.

7. Kautschukmischung nach einem der vorherigen Ansprüche, **dadurch gekennzeichnet, dass** geblockte und/oder ungeblockte Mercaptosilan die allgemeine Summenformel I) aufweist:
I) (R⁴)₃Si-Z-S-R⁵ ,
wobei die Reste R⁴ innerhalb eines Moleküls gleich oder verschieden voneinander sein können und Alkoxy-Gruppen mit 1 bis 10 Kohlenstoffatomen und/oder Alkylpolyethergruppen der Form -O-((CH₂)ₙ-O-)ₘR⁶ mit m = 2 bis 9 und n = 2 bis 9 sind, wobei die Reste R⁶ innerhalb eines Moleküls gleich oder verschieden voneinander sein können und Alkylgruppen mit 10 bis 25 Kohlenstoffatomen sind, und
wobei R⁵ eine Acylgruppe mit 1 bis 20 Kohlenstoffatomen oder ein Wasserstoffatom (H) ist, und
wobei Z eine Alkylgruppe mit 1 bis 10 Kohlenstoffatomen.

8. Kautschukmischung nach Anspruch 7, **dadurch gekennzeichnet, dass** es sich bei dem geblockten Mercaptosilan um 3-Octanoylthio-1-propyltriethoxysilan handelt.

9. Kautschukmischung nach Anspruch 7, **dadurch gekennzeichnet, dass** es sich bei dem ungeblockten Mercaptosilan um ein Molekül gemäß Formel I) handelt, bei dem eine der Gruppen R⁴ eine Ethoxygruppe und
die anderen beiden Gruppen R⁴ gleich und Alkylpolyethergruppen der oben beschriebenen Form -O-((CH₂)ₙ-O-)ₘR⁶ mit n = 2 und m = 5 sind,
wobei R⁶ eine unverzweigte aliphatische Alkylgruppe mit 13 Kohlenstoffatomen ist, und Z eine Propylgruppe ist.

10. Fahrzeugreifen, der in wenigstens einem Bauteil wenigstens ein Vulkanisat wenigstens einer schwefelvernetzbaren Kautschukmischung nach zumindest einem der Ansprüche 1 bis 9 aufweist.

11. Fahrzeugreifen nach Anspruch 10, **dadurch gekennzeichnet, dass** es sich bei dem Bauteil wenigstens um den Laufstreifen handelt.

## Claims

1. Sulfur-crosslinkable rubber mixture containing
- 20 to 100 phr of at least one functionalized styrene-butadiene copolymer A, wherein per polymer chain the functionalized styrene-butadiene copolymer is functionalized at at least one chain end with an amino-containing alkoxysilyl group and at least one further alkoxysilyl group and/or at least one further amino-containing alkoxysilyl group, and
- 7 to 15 phf of at least one blocked and/or unblocked mercaptosilane, wherein blocked mercaptosilanes have an S-SG group and thus a protecting group SG at the sulfur atom, wherein the protecting groups are acyl groups, and
- 20 to 300 phr of silica and/or carbon black.

2. Rubber mixture according to Claim 1, **characterized in that** the functionalized styrene-butadiene copolymer A is a solution polymerized styrene-butadiene copolymer.

3. Rubber mixture according to any of the preceding claims, **characterized in that** the functionalized styrene-butadiene copolymer A has a styrene content of 5% to 30% by weight.

4. Rubber mixture according to any of the preceding claims, **characterized in that** the functionalized styrene-butadiene copolymer A has a glass transition temperature of -15°C to -70°C.

5. Rubber mixture according to any of the preceding claims, **characterized in that** the functionalized styrene-butadiene copolymer A comprises a further group selected from the group consisting of alkoxysilyl-containing and amino-containing alkoxysilyl groups.

6. Rubber mixture according to any of the preceding claims, **characterized in that** it contains 3 to 30 phr of natural polyisoprene.

7. Rubber mixture according to any of the preceding claims, **characterized in that** blocked and/or unblocked mercaptosilane has the general empirical formula I):
I) (R⁴)₃Si-Z-S-R⁵,
wherein the radicals R⁴ within a molecule may be identical or different from one another and are alkoxy groups having 1 to 10 carbon atoms and/or alkyl polyether groups of the form -O-((CH₂)ₙ-O-)ₘR⁶ where m = 2 to 9 and n = 2 to 9, wherein the radicals R⁶ within a molecule may be identical or different from one another and are alkyl groups having 10 to 25 carbon atoms
and
wherein R⁵ is an acyl group having 1 to 20 carbon atoms or a hydrogen atom (H) and
wherein Z is an alkyl group having 1 to 10 carbon atoms.

8. Rubber mixture according to Claim 7, **characterized in that** the blocked mercaptosilane is 3-octanoylthio-1-propyltriethoxysilane.

9. Rubber mixture according to Claim 7, **characterized in that** the unblocked mercaptosilane is a molecule of formula I) where one of the groups R⁴ is an ethoxy group and
the other two groups R⁴ are identical and are alkyl polyether groups of the above-described form -0-((CH₂)ₙ-O-)ₘR⁶ where n = 2 and m = 5,
wherein R⁶ is an unbranched aliphatic alkyl group having 13 carbon atoms and Z is a propyl group.

10. Pneumatic vehicle tyre comprising in at least one component part at least one vulcanizate of at least one sulfur-crosslinkable rubber mixture according to at least one of Claims 1 to 9.

11. Pneumatic vehicle tyre according to Claim 10, **characterized in that** the component part is at least the tread.

## Revendications

1. Mélange de caoutchouc réticulable au soufre, contenant :
- 20 à 100 pce d'au moins un copolymère de styrène-butadiène fonctionnalisé A, le copolymère de styrène-butadiène fonctionnalisé étant fonctionnalisé, par chaîne polymère, à au moins une extrémité de chaîne avec un groupe alcoxysilyle contenant des groupes amino et au moins un ou plusieurs groupes alcoxysilyle supplémentaires et/ou au moins un ou plusieurs groupes alcoxysilyle contenant des groupes amino supplémentaires, et
- 7 à 15 pce d'au moins un mercaptosilane bloqué et/ou non bloqué, les mercaptosilanes bloqués comprenant un groupe S-SG et par conséquent un groupe protecteur SG sur l'atome de soufre, les groupes protecteurs étant des groupes acyle, et
- 20 à 300 pce de silice et/ou de noir de carbone.

2. Mélange de caoutchouc selon la revendication 1, **caractérisé en ce que** le copolymère de styrène-butadiène fonctionnalisé A est un copolymère de styrène-butadiène polymérisé en solution.

3. Mélange de caoutchouc selon l'une quelconque des revendications précédentes, **caractérisé en ce que** le copolymère de styrène-butadiène fonctionnalisé A présente une teneur en styrène de 5 à 30 % en poids.

4. Mélange de caoutchouc selon l'une quelconque des revendications précédentes, **caractérisé en ce que** le copolymère de styrène-butadiène fonctionnalisé A présente une température de transition vitreuse de -15 à -70 °C.

5. Mélange de caoutchouc selon l'une quelconque des revendications précédentes, **caractérisé en ce que** le copolymère de styrène-butadiène fonctionnalisé A comprend un groupe supplémentaire choisi dans le groupe constitué par les groupes alcoxysilyle et les groupes alcoxysilyle contenant des groupes amino.

6. Mélange de caoutchouc selon l'une quelconque des revendications précédentes, **caractérisé en ce qu'**il contient 3 à 30 pce de polyisoprène naturel.

7. Mélange de caoutchouc selon l'une quelconque des revendications précédentes, **caractérisé en ce que** le mercaptosilane bloqué et/ou non bloqué présente la formule globale générale I) :
I) (R⁴)₃Si-Z-S-R⁵
dans laquelle les radicaux R⁴ dans une molécule peuvent être identiques ou différents les uns des autres, et sont des groupes alcoxy de 1 à 10 atomes de carbone et/ou des groupes polyéther alkylique de formule -0-((CH₂)ₙ-O-)ₘR⁶ avec m = 2 à 9 et n = 2 à 9, les radicaux R⁶ dans une molécule pouvant être identiques ou différents, et étant des groupes alkyle de 10 à 25 atomes de carbone, et
R⁵ est un groupe acyle de 1 à 20 atomes de carbone ou un atome d'hydrogène (H), et
Z est un groupe alkyle de 1 à 10 atomes de carbone.

8. Mélange de caoutchouc selon la revendication 7, **caractérisé en ce que** le mercaptosilane bloqué est le 3-octanoylthio-1-propyltriéthoxysilane.

9. Mélange de caoutchouc selon la revendication 7, **caractérisé en ce que** le mercaptosilane non bloqué est une molécule selon la formule I), dans laquelle un des groupes R⁴ est un groupe éthoxy, et
les deux autres groupes R⁴ sont identiques et sont des groupes polyéther alkylique de la formule -O-((CH₂)ₙ-O-)ₘR⁶ décrite précédemment, avec n = 2 et m = 5,
R⁶ étant un groupe alkyle aliphatique non ramifié de 13 atomes de carbone,
et Z étant un groupe propyle.

10. Pneu de véhicule, qui comprend dans au moins un composant au moins un vulcanisat d'au moins un mélange de caoutchouc réticulable au soufre selon au moins l'une quelconque des revendications 1 à 9.

11. Pneu de véhicule selon la revendication 10, **caractérisé en ce que** le composant consiste au moins en la bande de roulement.
